# EUROPÄISCHE PATENTSCHRIFT

(11) **EP 2 346 715 B1**
(45) Veröffentlichungstag und Bekanntmachung des Hinweises auf die Patenterteilung: **24.04.2013**
(21) Anmeldenummer: 09783368.5
(22) Anmeldetag: 24.09.2009
(51) Int. Cl.: B60N 2/06

(54) **VORRICHTUNG ZUR LAGERUNG EINES LINEARANTRIEBS**
DEVICE FOR MOUNTING A LINEAR DRIVE
DISPOSITIF DE SUPPORT POUR ENTRAÎNEMENT LINÉAIRE

(30) Priorität: 20.11.2008 DE 102008043904
(43) Veröffentlichungstag der Anmeldung: 27.07.2011
(73) Patentinhaber: Robert Bosch GmbH, 70442 Stuttgart (DE)
(72) Erfinder: ANGERER, Christof, 76228 Karlsruhe (DE); LIENIG, Andreas, 77815 Buehl (DE)
(86) Internationale Anmeldenummer: PCT/EP2009/062378
(87) Internationale Veröffentlichungsnummer: WO 2010/057705

(56) Entgegenhaltungen:
- DE-C1- 10 060 715
- US-A- 5 348 262
- US-A- 6 138 974

## Beschreibung

### Stand der Technik

Linearantriebe, insbesondere Spindelantriebe, werden verwendet, um die rotatorische Bewegung eines Elektromotors in eine translatorische Bewegung wandeln zu können. Dies geschieht meist mittels Untersetzung des Elektromotors auf Basis eines Schneckentriebs, bei welchem die Drehzahl zugunsten der Hubkraft verringert wird. Spindelantriebe sind somit überall einsetzbar, wo zur Verstellung eines Systems, wie z.B. Autositze, Lenksäulen, usw., sowie auch in automotive fernen Anwendungen, translatorische Bewegungen benötigt werden.

Spindelantriebe unterteilen sich in Drehspindel- und Tauchspindelantriebe, welche wie folgt durch ihre Funktionsweise unterschieden werden: Beim Drehspindelantrieb wird die Axialhubbewegung durch eine Spindelmutter ausgeführt, wobei die Gewindespindel lediglich einen rotatorischen Freiheitsgrad besitzt. Bei Tauchspindelantrieben wird die Axialhubbewegung durch die Gewindespindel selbst ausgeführt, wobei im Gegensatz zu Drehspindelantrieben nicht die Spindelmutter als Anschluss an den zu verstellenden Mechanismus dient, sondern die Gewindespindel selbst verwendet werden kann.

Die vorliegende Erfindung betrifft eine Vorrichtung zur Lagerung eines Linearantriebs mittels zweier Bolzen, insbesondere zur Lagerung eines Tauchspindelantriebs zur Sitzverstellung in einem Kraftfahrzeug. Des Weiteren betrifft die Erfindung einen Sitzverstellmechanismus, umfassend einen Sitz und einen erfindungsgemäß gelagerten Linearantrieb.

### Offenbarung der Erfindung

Die erfindungsgemäße Vorrichtung zur Lagerung eines Linearantriebs mittels zweier Bolzen ermöglicht ein über die Lebensdauer betriebsfestes Anbindungskonzept für den Linearantrieb in eine Systemstruktur. Insbesondere bei Verwendung der erfindungsgemäßen Vorrichtung in einem Fahrzeug kann die Crash-Festigkeit erheblich erhöht werden. Diese Steigerung an Betriebs- und Crash-Festigkeit wird im Wesentlichen durch eine Wandlung von Biegespannung in Scherspannung erreicht. Zusätzlich ergibt sich Dank des modularen Aufbaues der erfindungsgemäßen Vorrichtung die Möglichkeit zur einfachen Implementierung der Erfindung an diverse Verstellmechanismen. Die geringe Teilevielfalt der erfindungsgemäßen Vorrichtung spart sowohl Herstellungs- als auch Montagekosten ein. Um all diese Vorteile zu verwirklichen, ist erfindungsgemäß eine Vorrichtung zur Lagerung eines Linearantriebs mittels zweier Bolzen vorgesehen. Dabei umfasst der Linearantrieb einen Motor an einem Getriebe mit einem Getriebegehäuse, wobei zwei Öffnungen am Getriebegehäuse eine Bolzenaufnahme bilden. Die beiden Bolzen sind jeweils unterteilt in einen Bolzenkopf, einen Befestigungsabschnitt und einen Lagerabschnitt. Der Lagerabschnitt befindet sich zwischen dem Bölzenkopf und dem Befestigungsabschnitt. Der Befestigungsabschnitt ist zur Befestigung des Bolzens in der Bolzenaufnahme ausgebildet, so dass der Bolzenkopf von einer Außenseite des Getriebegehäuses beabstandet ist und somit der Lagerabschnitt außerhalb des Getriebegehäuses als Lager bzw. Aufhängepunkt für den Linearantrieb zur Verfügung steht. Die Bolzen sind also dreiteilig ausgeführt, wobei der mittlere Teil, der Lagerabschnitt, beispielsweise als Lager für ein Schnittstellenbauteil an einem Fahrzeugsitz dienen kann. Dank der beiden Bolzenaufnahmen im Getriebegehäuse, welche als Gegenstück zu dem Befestigungsabschnitten der Bolzen dienen, kann eine Biegespannung auf ein Schnittstellenbauteil in Scherspannung gewandelt werden, wodurch ein Ausbiegen der Schnittstellenbauteile unter Last verhindert wird und die Erhöhung sowohl der Crash-Festigkeit als auch der Betriebsfestigkeit realisiert wird. Selbstverständlich muss der Bolzenkopf kein integraler Bestandteil des Bolzens sein, sondern kann z.B. auch durch eine aufgeschraubte Mutter gebildet werden.

Die Unteransprüche zeigen bevorzugte Weiterbildungen der Erfindung.

Um diese Umwandlung in Scherbelastung weiter zu optimieren, ist vorteilhafterweise vorgesehen, dass eine Länge der Bolzenaufnahme in axialer Richtung des Bolzens zumindest einem halben, bevorzugt einem dreiviertel, besonders bevorzugt einem ganzen Durchmesser des Befestigungsabschnitts der Bolzen entspricht. Die Bolzenaufnahme erstreckt sich also über eine ausreichende Länge, um den Bolzen im Wesentlichen mit Scherspannung zu belasten.

Ferner ist vorteilhafterweise vorgesehen, dass die Lagerabschnitte der beiden Bolzen als Gleitlager für den Linearantrieb dienen.

In vorteilhafter Ausgestaltung des Gleitlagers ist vorgesehen, dass die Lagerabschnitte der beiden Bolzen zylinderförmig sind und die Rotationssymmetrieachsen beider Lagerabschnitte fluchten. Dadurch steht der erfindungsgemäßen Vorrichtung ein rotatorischer Freiheitsgrad zur Verfügung und der Linearantrieb kann beispielsweise bei Ausführen einer Verstellbewegung geschwenkt werden.

In weiterer vorteilhafter Ausgestaltung ist vorgesehen, dass das Getriebegehäuse und der Bolzenkopf zumindest eines Bolzens einen Durchmesser des Lagerabschnitts überragen und somit einen axialen Anschlag in axialer Richtung des Bolzens für das Gleitlager darstellen. Ein Schnittstellenbauteil auf dem Lagerabschnitt ist somit beidseitig axial gesichert bzw. gelagert. Desweiteren ergibt sich hier der Vorteil, dass durch Heranführen der Bolzenaufnahme bis zum Lagerabschnitt bzw. bis zum Schnittstellenbauteil die Biegespannung auf Bolzen und Schnittstellenbauteil reduziert wird. Das Schnittstellenbauteil soll dabei natürlich nicht eingeklemmt werden, damit die Gleitlagerfunktion erhalten bleibt.

Ferner ist vorteilhafterweise vorgesehen, dass das Getriebegehäuse eine aufgesteckte Manschette mit zwei Manschettenöffnung in einer Mantelfläche der Manschette umfasst, wobei die beiden Manschettenöffnungen die Bolzenaufnahme bilden. Die Bolzenaufnahmen werden also nicht mehr direkt im Getriebegehäuse ausgeführt, sondern eine Manschette ergänzt das Getriebegehäuse, wobei an der Mantelfläche der Manschette die Bolzenaufnahmen ausgebildet sind. Die Manschette kann vorteilhafterweise sowohl einteilig als auch mehrteilig ausgeführt sein. Bei der Mehrteiligen Ausführung bietet sich z.B. eine Konstruktion mit zwei Halbschalen an.

Eine vorteilhafte Weiterbildung der Manschette sieht vor, dass die Manschette auf einem Mantelrohr des Getriebegehäuses sitzt, wobei das Mantelrohr zumindest eine Bolzenöffnung fluchtend mit einer Manschettenöffnung aufweist, wobei zumindest ein Bolzen einen axialen Fortsatz am Befestigungsabschnitt aufweist, und wobei der Fortsatz in der Bolzenöffnung steckt, um die Manschette drehfest auf dem Mantelrohr zu sichern. Das Getriebegehäuse weist also ein Mantelrohr auf, in welchem im Falle eines Tauchspindelantriebs die Tauchspindel hin und her bewegt wird. Auf dieses relativ dünne Mantelrohr wird dann die Manschette aufgesetzt und die beidseitigen Bolzenaufnahmen bilden eine Verstärkung der Manschette vom Mantelrohr zu den Schnittstellenbauteilen. Um nun die Manschette auch drehfest auf dem Mantelrohr zu sichern und um die Kraft vom Mantelrohr auf die Bolzen zu übertragen, weist das Mantelrohr zumindest eine Bolzenöffnung auf, in welche zumindest ein Bolzen ragt. Dieser Bolzen ist dann vierteilig ausgeführt und weist einen Bolzenkopf, einen Lagerabschnitt, einen Befestigungsabschnitt sowie den axialen Fortsatz auf. Diese Variante mit dem aufgesetzten Mantelrohr ist besonders montagefreundlich und es können z.B. vorhandene Spindelantriebe, insbesondere Tauchspindelantriebe, verwendet werden. Da optimalerweise zwei gegenüberliegende Bolzen verwendet werden und kein durchgehender Bolzen, eignet sich diese Lösung bestens für einen Tauchspindelantrieb.

Als eine weitere vorteilhafte Ausgestaltung der Manschette ist vorgesehen, dass diese als Ring ausgebildet ist, wobei die beiden Bolzenaufnahmen durch je eine Verstärkung, welche sich über die Länge der Bolzenaufnahme erstreckt, gebildet ist. Der Ring kann also materialsparend ausgeführt werden, wobei die Manschette lediglich um die Bolzenaufnahmen verstärkt ausgebildet ist. Diese verstärkten Bolzenaufnahmen können sowohl integral mit dem Ring gefertigt sein oder als separate Hülsen auf die Befestigungsabschnitte der Bolzen gesteckt werden.

Ferner vorteilhafterweise vorgesehen ist, dass der Befestigungsabschnitt mittels Schraubverbindung oder Presssitz und/oder Klebeverbindung in der Bolzenaufnahme befestigt ist. Somit ist vorteilhafterweise der Bolzen zumindest axial durch Form-, Kraft- und/oder Stoffschluss gesichert.

In einer bevorzugten Anwendung ist der Linearantrieb ein Tauchspindelantrieb. Dank der erfindungsgemäßen Verwendung von zwei gegenüberliegenden Bolzen anstatt eines durchgehenden Bolzens kann die erfindungsgemäße Vorrichtung sehr kompakt gebaut werden und die Tauchspindel wird in ihrer Bewegung nicht behindert.

Die Erfindung umfasst weiter einen Sitzverstellmechanismus, umfassend einen Sitz, insbesondere Fahrzeugsitz, und einen Linearantrieb, gelagert mit der erfindungsgemäßen Vorrichtung. Dabei weist der Sitz ein Schnittstellenbauteil mit zumindest einem Loch auf und der Lagerabschnitt zumindest eines Bolzens sitzt in diesem Loch. Besonders bevorzugt wird dieser Sitzverstellmechanismus zur Höhen- und/oder Neigungsverstellung des Fahrzeugsitzes verwendet.

### Kurze Beschreibung der Zeichnung

Nachfolgend wird ein Ausführungsbeispiel der Erfindung unter Bezugnahme auf die begleitende Zeichnung im Detail beschrieben. In der Zeichnung ist:
- Figur 1: ein Linearantrieb gemäß dem ersten Ausführungsbeispiel, dargestellt ohne der erfindungsgemäßen Lagerung des Linearantriebs,
- Figur 1a: der Linearantrieb gemäß dem ersten Ausführungsbeispiel, dargestellt ohne der erfindungsgemäßen Lagerung des Linearantriebs in Explosionsdarstellung,
- Figur 2: eine perspektivische Ansicht der erfindungsgemäßen Vorrichtung gemäß dem Ausführungsbeispiel, und
- Figur 3: eine geschnittene Ansicht der erfindungsgemäßen Vorrichtung gemäß dem Ausführungsbeispiel.

### Ausführungsform der Erfindung

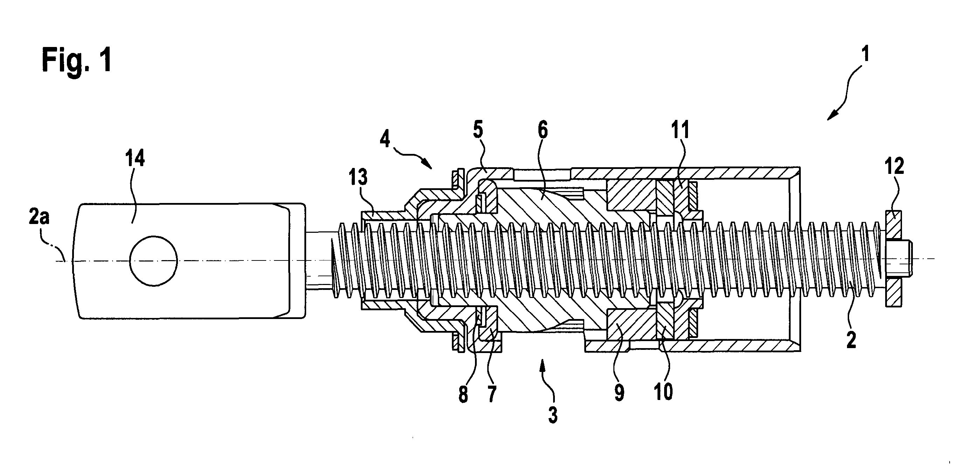

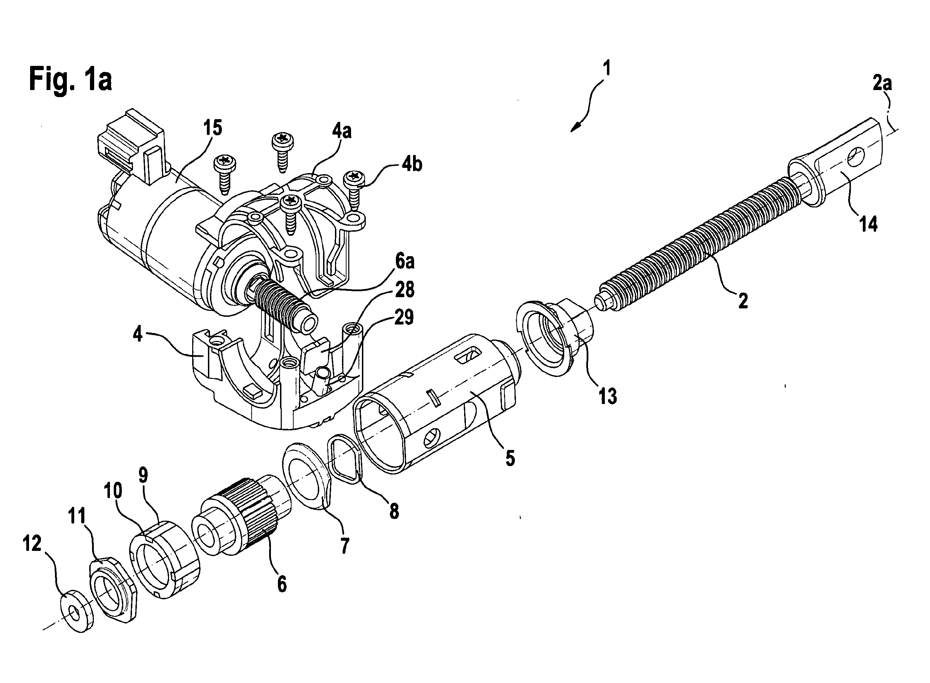

Im Folgenden wird anhand der Figuren 1 bis 3 das Ausführungsbeispiel der Erfindung genauer erläutert.

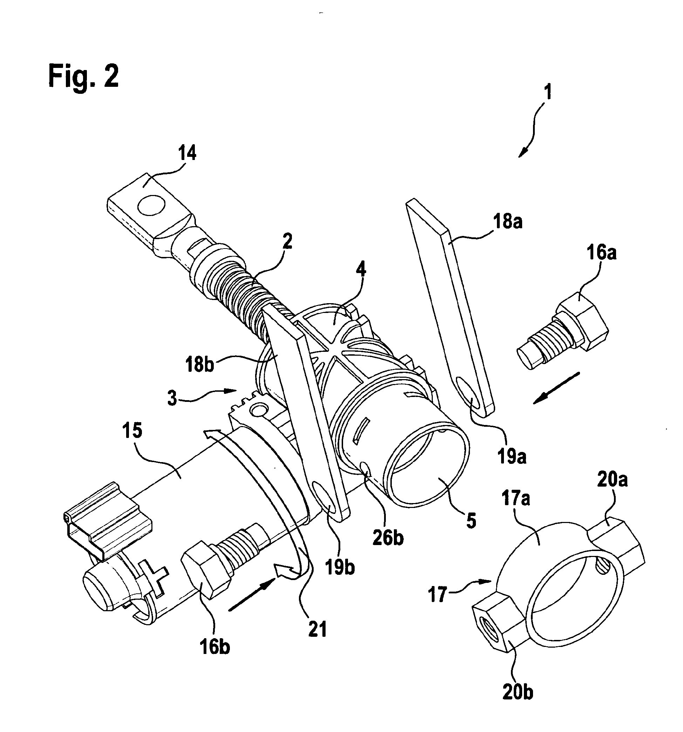

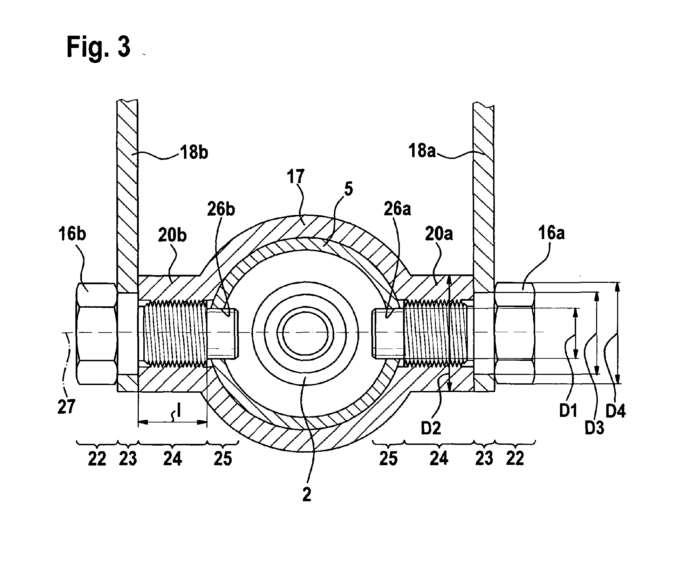

Figur 1 zeigt einen Linearantrieb 1 zur Verwendung für eine Sitzverstellung in einem Fahrzeug. Der Einfachheit halber wird die erfindungsgemäße Lagerung des Linearantriebs 1 erst in den Fig. 2 und 3 dargestellt. Der Linearantrieb 1 umfasst eine Gewindespindel 2, ausgebildet als Tauchspindel, ein Getriebe 3 sowie einen Elektromotor 15. Das Getriebe 3 umfasst ein Getriebegehäuse 4 mit einem zylindrischen Mantelrohr 5. Desweiteren zeigt Figur 1 ein Schneckenrad 6 zum Antrieb der Gewindespindel 2 sowie diverse Lagerelemente: eine erste Lagerscheibe 7, eine Wellfeder 8, eine Lagerhülse 9 und eine zweite Lagerscheibe 10. Zur Definierung der Endpositionen der Gewindespindel 2 weist das Getriebe 3 eine Anschlaghülse 11 sowie eine Abstandshülse 13 auf. An einem Ende der Gewindespindel 2 befindet sich ein Endanschlag 12, wobei sich an der anderen Seite der Gewindespindel 2 ein Anschluss 14 zur Verbindung des Linearantriebs mit einer Verstellmechanik des Sitzes im Fahrzeug befindet.

Die Gewindespindel 2 führt also eine Axialhubbewegung entlang einer Spindelachse 2a aus. Dabei taucht die Gewindespindel 2 durch das Getriebe 3. Das Getriebe 3 weist hierzu das Mantelrohr 5 auf, in welchem das Schneckenrad 6 radial gelagert wird. Die axiale Lagerung erfolgt mittels erster Lagerscheibe 7, wobei sich zwischen Mantelrohr 5 und erster Lagerscheibe 7 die Wellfeder 8 zum Spielausgleich befindet. Eine axiale wie auch radiale Lagerung des Schneckenrades 6 übernimmt die Lagerhülse 9 in Verbindung mit der zweiten Lagerscheibe 10. Die Anschlagdämpfung wird mittels Anschlaghülse 11 realisiert, auf welcher der Endanschlag 12 seine Endposition findet. Auf der gegenüberliegenden Seite schlägt der Anschluss 14 plan auf die Abstandshülse 13.

Der Elektromotor 15, welcher das Schneckenrad 3 antreibt, liefert also die benötigte Verstellkraft über ein Übersetzungsverhältnis mittels Schneckenatrieb.

Figur 1a zeigt denselben Linearantrieb wie Figur 1, jedoch in Explosionsdarstellung. Dabei ist zu sehen, dass das Getriebegehäuse 4 zwei Schalen umfasst und somit einen Getriebedeckel 4a aufweist. Dieser Getriebedeckel 4a ist mittels vier Schrauben 4b mit dem Getriebegehäuse 4 verbunden. Ferner zeigt Figur 1a, dass der Elektromotor 15 mit einer Schnecke 6a verbunden ist. Diese Schnecke 6a greift in das Schneckenrad 6 ein. Des Weiteren sind im Getriebegehäuse eine Ausgleichsplatte 28 und ein Dämpfungselement 29 zum Axialausgleich der Schnecke 6a angeordnet.

Figur 2 zeigt nun die erfindungsgemäße Vorrichtung zur Lagerung des Linearantriebs 1 mittels eines ersten Bolzens 16a und eines zweiten Bolzens 16b gemäß dem Ausführungsbeispiel. Wie bereits zu Figur 1 erwähnt, umfasst der Linearantrieb 1 einen Elektromotor 15 sowie das Getriebe 3 mit Getriebegehäuse 4 und Mantelrohr 5. Zusätzlich zeigt nun Figur 2 den ersten Bolzen 16a sowie den zweiten Bolzen 16b, eine Manschette 17 sowie ein erstes Schnittstellenbauteil 18a und ein zweites Schnittstellenbauteil 18b. Das erste Schnittstellenbauteil 18a weist ein erstes Schnittstellenloch 19a auf und das zweite Schnittstellenbauteil 18b weist ein zweites Schnittstellenloch 19b auf. Die Manschette 17 ist als Ring 17a ausgebildet, wobei sich auf der Mantelfläche an gegenüberliegenden Seiten eine erste Bolzenaufnahme 20a und eine zweite Bolzenaufnahme 20b erstrecken. Die erste Bolzenaufnahme 20a und die zweite Bolzenaufnahme 20b sind als Verstärkung auf dem Ring 17a ausgeführt. In dem Mantelrohr befinden sich, in flucht mit dem ersten Schnittstellenloch 19a und dem zweiten Schnittstellenloch 19b, eine erste Bolzenöffnung 26a sowie eine gegenüberliegende zweite Bolzenöffnung 26b (erste Bolzenöffnung 26a ist erst in Fig. 3 zu sehen). Mittels eines Pfeils 21 ist eine mögliche Schwenkrichtung des Linearantriebs 1 dargestellt.

Die erfindungsgemäße Vorrichtung ist in Figur 2 teilweise als Explosionszeichnung dargestellt. Für den Fachmann ist jedoch ersichtlich, dass sich der erste Bolzen 16a durch die erste Bolzenaufnahme 20a und das erste Schnittstellenloch 19a in die erste Bolzenöffnung 26a erstreckt. Analoges gilt für den zweiten Bolzen 16b. Dieser Aufbau wird anhand von Figur 3 noch genauer erläutert werden.

Das erste Schnittstellenbauteil 18a sowie das zweite Schnittstellenbauteil 18b dienen zur Befestigung bzw. Lagerung des Linearantriebs 1 an z.B. einem Fahrzeugsitz. Das erste Schnittstellenbauteil 18a sowie das zweite Schnittstellenbauteil 18b sind hier der Einfachheit halber als längliche Bleche dargestellt. Der Fachmann erkennt jedoch, dass unterschiedlichste Geometrien für das erste Schnittstellenbauteil 18a sowie das zweite Schnittstellenbauteil 18b denkbar sind und es im Wesentlichen auf das erste Schnittstellenloch 19a und das zweite Schnittstellenloch 19b ankommt.

Würde man die Manschette 17 und insbesondere die erste Bolzenaufnahme 20a sowie die zweite Bolzenaufnahme 20b weglassen, so würde sich eine Belastung entlang der Gewindespindel 2 direkt als Biegespannung am ersten Bolzen 16a sowie am zweiten Bolzen 16b bemerkbar machen. Um eben diese Biegebelastung zu vermeiden, wird die Manschette 17 mit der ersten Bolzenaufnahme 20a und der zweiten Bolzenaufnahme 20b verstärkt.

Figur 3 zeigt nun die erfindungsgemäße Vorrichtung nach dem Ausführungsbeispiel gemäß einem Schnitt senkrecht zur Längsachse der Gewindespindel 2. Hierbei ist gut zu sehen, wie der ersten Bolzen 16a sowie der zweite Bolzen 16b jeweils in vier Abschnitte unterteilt ist. Der außenliegendste Abschnitt ist der Bolzenkopf 22 mit dem vierten Durchmesser D4, daraufhin folgt ein Lagerabschnitt 23 mit einem dritten Durchmesser D3, ein Befestigungsabschnitt 24 mit einem ersten Durchmesser D1 und einem Außengewinde sowie ein Fortsatz 25.

Wie in Figur 3 gut zu sehen ist, sind die erste Bolzenöffnung 26a, die zweite Bolzenöffnung 26, die erste Bolzenaufnahme 20a, die zweite Bolzenaufnahme 20b, das erste Schnittstellenloch 19a und das zweite Schnittstellenloch 19b konzentrisch um eine Bolzenachse 27 angeordnet. Diese Bolzenachse 27 bildet eine Rotationssymmetrieachse für den ersten Bolzen 16a und den zweiten Bolzen 16b. Dadurch kann der gesamte Linearantrieb 1 um die Bolzenachse 27 geschwenkt werden. Diese Schwenkbewegung wird unterstützt durch die Funktion des Lagerabschnitts 23 als Gleitlager. Der Lagerabschnitt 23 mit seinem dritten Durchmesser D3 sitzt im ersten Schnittstellenloch 19a bzw. zweiten Schnittstellenloch 19b. Desweiteren ist der vierte Durchmesser D4 des Bolzenkopfes 22 sowie ein zweiter Durchmesser D2 der ersten Bolzenaufnahme 20a bzw. der zweiten Bolzenaufnahme 20b größer als der dritte Durchmesser D3. Folglich ist sowohl das erste Schnittstellenbauteil 18a als auch das zweite Schnittstellenbauteil 18b entlang der Bolzenachse 27 axial gelagert und gegen verrutschen gesichert.

Um den ersten Bolzen 16a sowie den zweiten Bolzen 16b im Wesentlichen durch Scherspannung zu belasten, ist der erste Durchmesser D1 des Befestigungsabschnitts 24 gleich einer Länge L des Befestigungsabschnitts 24 und der gesamte Befestigungsabschnitt 24 wird über die Länge L durch die erste Bolzenaufnahme 20a bzw. die zweite Bolzenaufnahme 20b gestützt.

Die dargestellte Vorrichtung zur Lagerung eines Linearantriebs ermöglicht eine Erhöhung der Betriebsfestigkeit über die Lebensdauer der gesamten Anordnung. Bei dem erfindungsgemäßen Einsatz der Vorrichtung in einem Fahrzeug wird die Crash-Festigkeit des Linearantriebs und dessen Anbindung am Fahrzeug erheblich erhöht. Dank des modularen Aufbaues mit der Manschette ist die Anbindung an ein Schnittstellenbauteil flexibel und eine einfache Implementierung an verschiedenste Verstellmechanismen ist möglich.

## Patentansprüche

1. Vorrichtung zur Lagerung eines Linearantriebs (1) mittels zweier Bolzen (16a, 16b),
- wobei der Linearantrieb (1) einen Motor (15) an einem Getriebe (3) mit einem Getriebegehäuse (4) umfasst, wobei zwei Öffnungen am Getriebegehäuse (4) eine Bolzenaufnahme (20a, 20b) bilden,
- wobei die Bolzen (16a, 16b) jeweils unterteilt sind in einen Bolzenkopf (22), einen Befestigungsabschnitt (24) und einen Lagerabschnitt (23) zwischen dem Bolzenkopf (22) und dem Befestigungsabschnitt (24),
- wobei der Befestigungsabschnitt (24) zur Befestigung des Bolzens (16a, 16b) in der Bolzenaufnahme (20a, 20b) ausgebildet ist, so dass der Bolzenkopf (22) von einer Außenseite des Getriebegehäuses (4) beabstandet ist und somit der Lagerabschnitt (23) außerhalb des Getriebegehäuses (4) als Lager für den Linearantrieb (1) angeordnet ist.

2. Vorrichtung nach Anspruch 1, **dadurch gekennzeichnet, dass** eine Länge (L) der Bolzenaufnahme (20a, 20b) in axialer Richtung des Bolzens (16a, 16b) zumindest einem halben, bevorzugt einem dreiviertel, besonders bevorzugt einem ganzen ersten Durchmesser (D1) des Befestigungsabschnitts (24) entspricht.

3. Vorrichtung nach Anspruch 1 oder 2, **dadurch gekennzeichnet, dass** die Lagerabschnitte (23) der beiden Bolzen (16a, 16b) als Gleitlager für die Lagerung des Linearantriebs (1) dienen.

4. Vorrichtung nach Anspruch 3, **dadurch gekennzeichnet, dass** die Lagerabschnitte (23) der beiden Bolzen (16a, 16b) zylinderförmig sind und die Rotationssymmetrieachsen (27) beider Lagerabschnitte (23) fluchten.

5. Vorrichtung nach einem der Ansprüche 3 oder 4, **dadurch gekennzeichnet, dass** das Getriebegehäuse (4) und der Bolzenkopf (22) zumindest eines Bolzens (16a, 16b) einen dritten Durchmesser (D3) des Lagerabschnitts (23) überragen und somit einen Axialanschlag in axialer Richtung des Bolzens (16a, 16b) für das Gleitlager darstellen.

6. Vorrichtung nach einem der vorhergehenden Ansprüche, **dadurch gekennzeichnet, dass** das Getriebegehäuse (4) eine aufgesteckte Manschette (17) mit zwei Manschettenöffnungen für die beiden Bolzen (16a, 16b) in einer Mantelfläche der Manschette (17) umfasst, wobei die beiden Manschettenöffnungen die Bolzenaufnahmen (20a, 20b) bilden.

7. Vorrichtung nach Anspruch 6, **dadurch gekennzeichnet, dass** die Manschette (17) auf einem Mantelrohr (5) des Getriebegehäuses (4) sitzt, wobei das Mantelrohr (5) zumindest eine Bolzenöffnung (26a, 26b) fluchtend mit einer Manschettenöffnung aufweist, wobei zumindest ein Bolzen (16a, 16b) einen axialen Fortsatz (25) am Befestigungsabschnitt (24) aufweist, und wobei der Fortsatz (25) in der Bolzenöffnung (26a, 26b) steckt um die Manschette (17) drehfest auf dem Mantelrohr (5) zu sichern.

8. Vorrichtung nach einem der Ansprüche 6 oder 7, **dadurch gekennzeichnet, dass** die Manschette (17) ein Ring ist, wobei die beiden Bolzenaufnahmen (20a, 20b) durch je eine Verstärkungen, welche sich über die gesamte Länge (L) der Bolzenaufnahme (20a, 20b) erstreckt, gebildet sind.

9. Vorrichtung nach einem der vorhergehenden Ansprüche, **dadurch gekennzeichnet, dass** zumindest ein Befestigungsabschnitt (24) mittels Formschluss und/oder Kraftschluss und/oder Stoffschluss in der Bolzenaufnahme (20a, 20b) befestigt ist.

10. Vorrichtung nach einem der vorhergehenden Ansprüche, **dadurch gekennzeichnet, dass** der Linearantrieb (1) ein Tauchspindelantrieb ist.

11. Sitzverstellmechanismus umfassend einen Sitz und einen Linearantrieb (1) gelagert mit einer Vorrichtung nach einem der vorhergehenden Ansprüche, wobei der Sitz ein Schnittstellenbauteil (18a, 18b) mit zumindest einem Schnittstellenloch (19a, 19b) aufweist, und wobei der Lagerabschnitt (23) zumindest eines Bolzens (16a, 16b) in dem Schnittstellenloch (19a, 19b) angeordnet ist.

## Claims

1. Apparatus for mounting a linear drive (1) by means of two pins (16a, 16b),
- the linear drive (1) comprising a motor (15) on a gear mechanism (3) with a gear-mechanism housing (4), two openings on the gear-mechanism housing (4) forming a pin receptacle (20a, 20b),
- the pins (16a, 16b) being divided in each case into a pin head (22), a fastening section (24) and a bearing section (23) between the pin head (22) and the fastening section (24),
- the fastening section (24) being configured to fasten the pin (16a, 16b) in the pin receptacle (20a, 20b), with the result that the pin head (22) is spaced apart from an outer side of the gear-mechanism housing (4) and the bearing section (23) is therefore arranged outside the gear-mechanism housing (4) as bearing for the linear drive (1).

2. Apparatus according to Claim 1, **characterized in that**, in the axial direction of the pin (16a, 16b), a length (L) of the pin receptacle (20a, 20b) corresponds to at least half, preferably three quarters, particularly preferably a whole first diameter (D1) of the fastening section (24).

3. Apparatus according to Claim 1 or 2, **characterized in that** the bearing sections (23) of the two pins (16a, 16b) serve as plain bearing for mounting the linear drive (1).

4. Apparatus according to Claim 3, **characterized in that** the bearing sections (23) of the two pins (16a, 16b) are cylindrical and the rotational symmetry axes (27) of both bearing sections (23) are aligned.

5. Apparatus according to either of Claims 3 and 4, **characterized in that** the gear-mechanism housing (4) and the pin head (22) of at least one pin (16a, 16b) protrude beyond a third diameter (D3) of the bearing section (23) and therefore form an axial stop in the axial direction of the pin (16a, 16b) for the plain bearing.

6. Apparatus according to one of the preceding claims, **characterized in that** the gear-mechanism housing (4) comprises a plugged-on sleeve (17) with two sleeve openings for the two pins (16a, 16b) in a circumferential face of the sleeve (17), the two sleeve openings forming the pin receptacles (20a, 20b).

7. Apparatus according to Claim 6, **characterized in that** the sleeve (17) is seated on a casing tube (5) of the gear-mechanism housing (4), the casing tube (5) having at least one pin opening (26a, 26b) in an aligned manner with a sleeve opening, at least one pin (16a, 16b) having an axial projection (25) on the fastening section (24), and the projection (25) being plugged in the pin opening (26a, 26b) in order to secure the sleeve (17) on the casing tube (5) in a rotationally fixed manner.

8. Apparatus according to either of Claims 6 and 7, **characterized in that** the sleeve (17) is a ring, the two pin receptacles (20a, 20b) being formed by in each case one reinforced portion which extends over the entire length (L) of the pin receptacle (20a, 20b).

9. Apparatus according to one of the preceding claims, **characterized in that** at least one fastening section (24) is fastened in the pin receptacle (20a, 20b) by means of a positively locking connection and/or non-positive connection and/or material-to-material connection.

10. Apparatus according to one of the preceding claims, **characterized in that** the linear drive (1) is a plunger spindle drive.

11. Seat adjusting mechanism comprising a seat and a linear drive (1) mounted by way of an apparatus according to one of the preceding claims, the seat having an interface component (18a, 18b) with at least one interface hole (19a, 19b), and the bearing section (23) of at least one pin (16a, 16b) being arranged in the interface hole (19a, 19b).

## Revendications

1. Dispositif de support sur palier d'un entraînement linéaire (1) au moyen de deux boulons (16a, 16b),
- l'entraînement linéaire (1) comprenant un moteur (15) au niveau d'une transmission (3) comprenant un boîtier de transmission (4), deux ouvertures sur le boîtier de transmission (4) formant un logement (20a, 20b) pour les boulons,
- les boulons (16a, 16b) étant chacun divisés en une tête de boulon (22), une portion de fixation (24) et une portion de palier (23) entre la tête de boulon (22) et la portion de fixation (24),
- la portion de fixation (24) pour la fixation du boulon (16a, 16b) étant réalisée dans le logement de boulon (20a, 20b) de telle sorte que la tête de boulon (22) soit espacée d'un côté extérieur du boîtier de transmission (4) et donc que la portion de palier (23) soit disposée à l'extérieur du boîtier de transmission (4) en tant que palier pour l'entraînement linéaire (1).

2. Dispositif selon la revendication 1, **caractérisé en ce qu'**une longueur (L) du logement (20a, 20b) pour les boulons dans la direction axiale du boulon (16a, 16b) correspond au moins à la moitié, de préférence aux trois quarts, particulièrement préférablement à un premier diamètre complet (D1) de la portion de fixation (24).

3. Dispositif selon la revendication 1 ou 2, **caractérisé en ce que** les portions de palier (23) des deux boulons (16a, 16b) servent de paliers lisses pour le support sur palier de l'entraînement linéaire (1).

4. Dispositif selon la revendication 3, **caractérisé en ce que** les portions de palier (23) des deux boulons (16a, 16b) sont cylindriques et les axes de symétrie de révolution (27) des deux portions de palier (23) sont alignés.

5. Dispositif selon l'une quelconque des revendications 3 ou 4, **caractérisé en ce que** le boîtier de transmission (4) et la tête de boulon (22) d'au moins un boulon (16a, 16b) dépassent d'un troisième diamètre (D3) de la portion de palier (23) et constituent ainsi une butée axiale dans la direction axiale du boulon (16a, 16b) pour le palier lisse.

6. Dispositif selon l'une quelconque des revendications précédentes, **caractérisé en ce que** le boîtier de transmission (4) comprend une manchette enfichée (17) avec deux ouvertures de manchette pour les deux boulons (16a, 16b) dans une surface d'enveloppe de manchette (17), les deux ouvertures de manchette formant les logements (20a, 20b) pour les boulons.

7. Dispositif selon la revendication 6, **caractérisé en ce que** la manchette (17) repose sur un tube d'enveloppe (5) du boîtier de transmission (4), le tube d'enveloppe (5) présentant au moins une ouverture de boulon (26a, 26b) en alignement avec une ouverture de manchette, au moins un boulon (16a, 16b) présentant une saillie axiale (25) au niveau de la portion de fixation (24), et la saillie (25) s'enfichant dans l'ouverture de boulon (26a, 26b) afin de fixer la manchette (17) de manière solidaire en rotation sur le tube d'enveloppe (5).

8. Dispositif selon l'une quelconque des revendications 6 ou 7, **caractérisé en ce que** la manchette (17) est une bague, les deux logements (20a, 20b) pour les boulons étant formés chacun par un renforcement, qui s'étend sur toute la longueur (L) du logement (20a, 20b) pour les boulons.

9. Dispositif selon l'une quelconque des revendications précédentes, **caractérisé en ce qu'**au moins une portion de fixation (24) est fixée par engagement par correspondance géométrique et/ou par rapport force et/ou par liaison de matière dans le logement (20a, 20b) pour les boulons.

10. Dispositif selon l'une quelconque des revendications précédentes, **caractérisé en ce que** l'entraînement linéaire (1) est un entraînement à broche plongeante.

11. Mécanisme de réglage de siège comprenant un siège et un entraînement linéaire (1) supporté sur palier avec un dispositif selon l'une quelconque des revendications précédentes, le siège présentant un composant d'interface (18a, 18b) avec au moins un trou d'interface (19a, 19b), et la portion de palier (23) d'au moins un boulon (16a, 16b) étant disposée dans le trou d'interface (19a, 19b).
